# EUROPEAN PATENT APPLICATION

(11) **EP 1 426 343 A2**
(43) Date of publication of application: **09.06.2004**
(21) Application number: 03025757.0
(22) Date of filing: 10.11.2003
(51) Int. Cl.: C03B 37/029

(54) **Method and apparatus for drawing an optical fiber from a preform**

(30) Priority: 13.11.2002 JP 2002329914
(71) Applicant: SUMITOMO ELECTRIC INDUSTRIES, Ltd, Osaka-shi, Osaka 541-0041 (JP)
(72) Inventor: Kuwahara, Kazuya, Yokohama Works, Yokohama-shi Kanagawa (JP); Chigusa, Yoshiki, Yokohama Works, Yokohama-shi Kanagawa (JP)
(74) Representative: HOFFMANN - EITLE

(57) **Abstract**

A method capable of stably drawing an optical fiber with a gas-seal system and an apparatus for implementing the method. The method produces an optical fiber 40b by drawing the optical fiber preform 30 by heating and softening the leading-end portion of it while feeding it into a drawing furnace 20. The drawing furnace 20 allows a gas 15 to blow against the optical fiber preform 30. The inside of the drawing furnace 20 is sealed with a seal ring 14U and a shutter 14L located at the top and bottom portions of it, respectively. While the gas 15 is fed, the inner diameter of the seal ring 14U is adjusted according to the diameter of the optical fiber preform 30. Consequently, even when the preform diameter varies, the clearance between the seal ring 14U and the optical fiber preform 30 can be maintained constant, thereby enabling a stable drawing operation.

## Description

### BACKGROUND OF THE INVENTION

### Field of the Invention

The present invention relates to a method capable of stably drawing an optical fiber with a gas-seal system and an apparatus for implementing the method.

### Description of the Background Art

Optical fibers are produced by the following process. First, an optical fiber preform made of silica glass or another material is fed into a drawing apparatus. The leading-end portion of the optical fiber preform is heated and softened in the drawing furnace. The softened leading end is drawn downward to reduce the diameter. The drawing furnace is provided with a muffle tube and a heater, which are made of carbon in many cases. In this case, these members must be protected from oxidation by using an inert gas as the atmospheric gas in the furnace. In addition, the surface of the optical fiber preform must be maintained clean during the drawing operation in order to secure longitudinal uniformity of the drawn optical fiber. To meet the foregoing two requirements, the drawing furnace is structured so as not to make contact with the optical fiber preform, and the space between the muffle tube and the optical fiber preform is filled with an inert gas to form a gas-seal structure so that the oxidation of the muffle tube and the heater can be prevented, in many cases.

An example of the gas-seal structure is shown in the published Japanese patent application *Tokukaishou* 62-176938. In this example, the inert gas is fed by blowing it onto the optical fiber preform at the top portion of the drawing furnace. The blown inert gas hits the optical fiber preform to divide into an upward-flowing stream and a downward-flowing stream. The upward-flowing stream prevents oxygen from entering at the clearance between the optical fiber preform and the muffle tube. The downward-flowing stream prevents oxygen from entering from under by flowing toward a shutter located at the bottom portion of the drawing furnace after suppressing the upward flow of the atmospheric gas due to the heat in the furnace. The above-described gas streams maintain the pressure inside the drawing furnace higher than that of the atmosphere at all times.

### SUMMARY OF THE INVENTION

An object of the present invention is to offer a method capable of stably drawing an optical fiber with a gas-seal system and an apparatus for implementing the method.

According to the present invention, the foregoing object is attained by offering the following method of drawing an optical fiber. This method comprises the following steps:
(a) feeding an optical fiber preform into a drawing furnace;
(b) adjusting the inner diameter of a seal ring located at the top portion of the drawing furnace while feeding the optical fiber preform;
(c) feeding a gas into the drawing furnace such that the gas hits the optical fiber preform and produces a stream that flows out at the clearance between the seal ring and the optical fiber preform; and
(d) drawing the optical fiber by heating and softening the leading-end portion of the optical fiber preform.

The above-described step of adjusting the inner diameter of the seal ring may be performed based on the diameter of the optical fiber preform. The foregoing step may also be performed in such a way that the inside pressure of a muffle tube placed in the drawing furnace becomes constant.

According to one aspect of the present invention, the present invention offers the following apparatus for drawing an optical fiber by heating the leading-end portion of an optical fiber preform while feeding it into a drawing furnace. This apparatus comprises:
(a) a gas-sealing structure comprising a seal ring and a gas feeder capable of blowing a gas against the optical fiber preform;
(b) a seal-ring actuator capable of adjusting the inner diameter of the seal ring; and
(c) a controller for controlling the seal-ring actuator.

Advantages of the present invention will become apparent from the following detailed description, which illustrates the best mode contemplated to carry out the invention. The invention can also be carried out by different embodiments, and its several details can be modified in various respects, all without departing from the invention. Accordingly, the accompanying drawing and the following description are illustrative in nature, not restrictive.

### BRIEF DESCRIPTION OF THE DRAWING

The present invention is illustrated to show examples, not to show limitations, in the figures of the accompanying drawing. In the drawing, the same reference numeral and sign refer to a similar element.

In the drawing:
Figure 1 is a schematic diagram showing an embodiment of the optical fiber-drawing apparatus of the present invention.
Figure 2 is a schematic diagram showing a relative position between the opening of a seal ring and a small-diameter optical fiber preform.
Figure 3 is a schematic diagram showing a relative position between the opening of a seal ring and a large-diameter optical fiber preform.
Figure 4 is a schematic diagram showing a relative position between a seal ring and an optical fiber preform when the optical fiber preform is in an eccentric position with respect to the drawing apparatus.
Figure 5 is a graph showing the relationship between the diameter and longitudinal position of optical fiber preforms *A*, *B*, *C*, and *D* used in individual embodiments.
Figure 6 is a graph showing the relationship between the maximum deviation of the diameter of the glass fiber and the corresponding longitudinal position of the optical fiber preform *A* from which the diameter-measured position of the glass fiber is drawn.
Figure 7 is a graph showing the relationship between the maximum deviation of the diameter of the glass fiber and the corresponding longitudinal position of the optical fiber preform *B* from which the diameter-measured position of the glass fiber is drawn.
Figure 8 is a graph showing the relationship between the maximum deviation of the diameter of the glass fiber and the corresponding longitudinal position of the optical fiber preform *C* from which the diameter-measured position of the glass fiber is drawn.
Figure 9 is a graph showing the relationship between the maximum deviation of the diameter of the glass fiber and the corresponding longitudinal position of the optical fiber preform *D* from which the diameter-measured position of the glass fiber is drawn.
Figure 10 is a graph showing the relationship between the diameter and longitudinal position of an optical fiber preform used in a comparative example.
Figure 11 is a graph showing the relationship between the maximum deviation of the diameter of the glass fiber and the corresponding longitudinal position of the optical fiber preform used in the comparative example from which the diameter-measured position of the glass fiber is drawn.

### DETAILED DESCRIPTION OF THE INVENTION

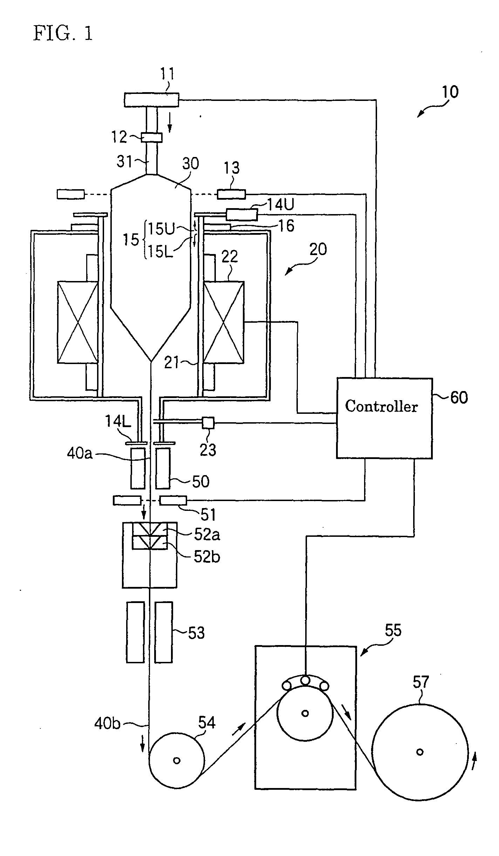

Figure 1 is a schematic diagram showing an embodiment of the optical fiber-drawing apparatus of the present invention. A drawing apparatus 10 is equipped with a preform feeder 11 directly above a drawing furnace 20. The preform feeder 11 has a clamp 12, which holds a glass rod 31 attached to the top portion of an optical fiber preform 30. As the preform feeder 11 descends, the optical fiber preform 30 is fed into the drawing furnace 20.

The drawing furnace 20 is provided with a seal ring 14U at the top portion to seal its interior against the atmosphere. Directly above the seal ring 14U, a preform diameter monitor 13 is located to measure the diameter of the optical fiber preform 30 on a noncontact basis. Under the seal ring 14U, a gas feeder 16 is located to feed an inert gas 15, such as Ar, N, or He, into the drawing furnace 20.

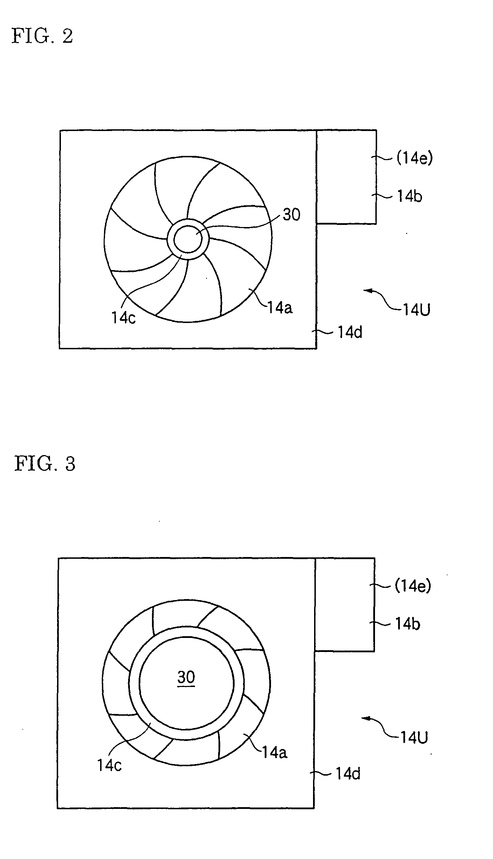

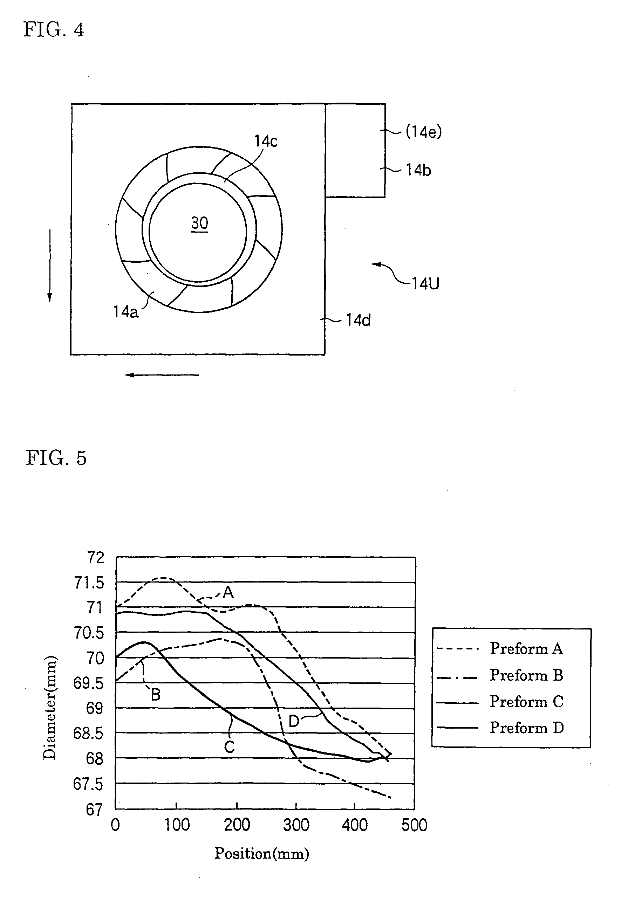

Figure 2 is a schematic diagram showing a relative position between the opening of the seal ring 14U and a small-diameter optical fiber preform 30. Figure 3 is a schematic diagram showing a relative position between the opening of the seal ring 14U and a large-diameter optical fiber preform 30. Figure 4 is a schematic diagram showing a relative position between the seal ring 14U and an optical fiber preform 30 when the optical fiber preform 30 is in an eccentric position with respect to the drawing apparatus. As shown in Figs. 2 to 4, the seal ring 14U is composed of a so-called iris diaphragm 14a. The iris diaphragm 14a is operated with a seal-ring actuator 14b so that the size of the central opening 14c can be adjusted according to the passing optical fiber preform 30. When the optical fiber preform 30 is in an eccentric position with respect to the drawing furnace 20, as shown in Fig. 4, a base plate 14d supporting the iris diaphragm 14a is shifted right and left and backward and forward with a seal-ring shifter 14e so that the optical fiber preform 30 can pass through the center of the seal ring 14U.

The drawing furnace 20 is equipped at its center with a cylindrical muffle tube 21 made of carbon to allow the optical fiber preform 30 to pass through it. The drawing furnace 20 is also equipped at the outside of the muffle tube 21 with a heater 22. A differential pressure gauge 23 is located at the bottom portion of the drawing furnace 20 to measure the pressure difference between the inside of the drawing furnace 20 and the outside atmosphere. The drawing furnace 20 is also equipped at its bottom end with a shutter 14L, which is a seal ring similar in function to the above-described seal ring 14U located at the top end.

A cooling pipe 50 is located under the drawing furnace 20 to cool the drawn glass fiber 40a. A fiber diameter monitor 51 is located under the cooling pipe 50 to measure the diameter of the drawn glass fiber 40a.

Under the fiber diameter monitor 51, a first coating section 52a is located to apply a coating material onto the drawn glass fiber 40a to form a first coating, and, in succession, a second coating section 52b is located to apply a coating material to form a second coating. Under the second coating section 52b, a curing section 53 is located to cure the first and second coatings at the same time. When an ultraviolet cure resin (UV resin) is used for the coating, the first coating section 52a applies a UV resin for the first coating onto the glass fiber 40a, the second coating section 52b applies a UV resin for the second coating, and the curing section 53 cures them by the irradiation of ultraviolet with ultraviolet lamps. When a thermosetting resin is used for the coating, the curing section 53 employs a heating device.

Thus, a drawn and coated optical fiber 40b is formed. The optical fiber 40b passes through a guide roller 54 by the pulling force of a capstan 55 and is wound onto a take-up reel 57 to complete the production.

The following members are connected to a controller 60 for controlling the seal-ring actuator to feed back signals of measured data or to send and receive signals for actuating directions and other information: the preform feeder 11, the preform diameter monitor 13, the seal-ring actuator 14b, the seal-ring shifter 14e, the heater 22, the differential pressure gauge 23, the fiber diameter monitor 51, and the capstan 55.

Next, the method of drawing an optical fiber of the present invention is explained below by referring to Fig. 1. The controller 60 controls the preform feeder 11 to descend the optical fiber preform 30 to feed it into the drawing furnace 20. The diameter of the optical fiber preform 30 is measured by the preform diameter monitor 13 located directly above the seal ring 14U, and the measured data is sent to the controller 60. The controller 60 controls the seal-ring actuator 14b based on the measured data of the diameter to adjust the iris diaphragm 14a so that the difference between the inner diameter of the seal ring 14U and the diameter of the optical fiber preform 30 can become constant.

The inert gas 15 is blown into the drawing furnace 20 from the gas feeder 16 so as to hit the optical fiber preform 30. After hitting the optical fiber preform 30, the inert gas 15 divides into an upward-flowing stream 15U and a downward-flowing stream 15L. The upward-flowing stream 15U flows out at the clearance between the seal ring 14U and the optical fiber preform 30, preventing the ingress of the outside air and dust into the drawing furnace 20. On the other hand, the downward-flowing stream 15L flows downward through the space between the optical fiber preform 30 and the muffle tube 21. This stream not only prevents the adhesion of impurities such as dust on the surface of the optical fiber preform 30 but also prevents the oxidation of the muffle tube 21 resulting from the contact with oxygen.

The glass fiber 40a drawn out of the drawing furnace 20 passes through the shutter 14L and is cooled at the cooling pipe 50. The fiber diameter monitor 51 measures the diameter of the glass fiber 40a to feed back the data to the controller 60. The controller 60 controls the drawing speed of the capstan 55 based on the fed-back data of the diameter. For example, if the measured diameter is excessively small, the drawing speed is decreased. If the diameter is excessively large, the drawing speed is increased.

Subsequently, the glass fiber 40a is coated with a coating material at the first and second coating sections 52a and 52b. The coating material is cured at the curing section 53 to form the coating. The coated optical fiber 40b passes through the guide roller 54 by the pulling force of the capstan 55 and is wound onto the take-up reel 57 to complete the production.

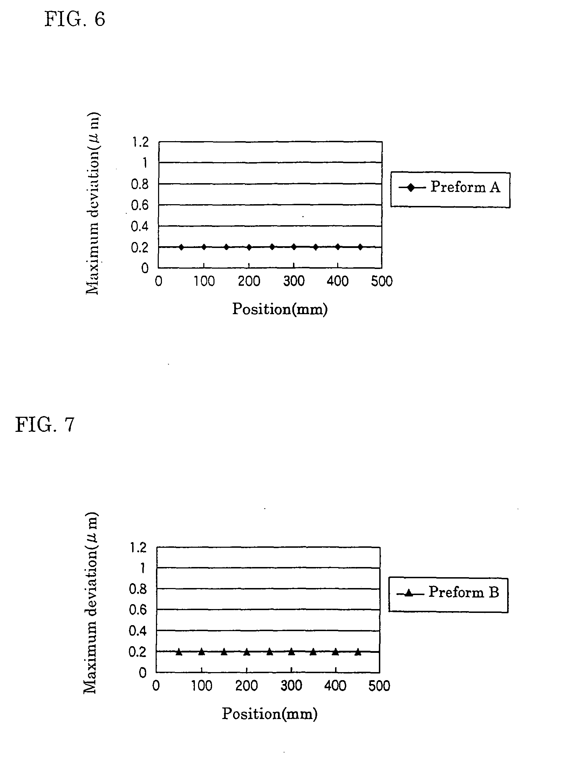

Figure 5 is a graph showing the relationship between the diameter and longitudinal position of optical fiber preforms *A*, *B*, *C*, and *D* used in individual embodiments. Figure 6 is a graph showing the relationship between "the maximum deviation of the diameter of the glass fiber" and the corresponding longitudinal position of the optical fiber preform *A* from which the diameter-measured position of the glass fiber is drawn. Here, the expression "the maximum deviation of the diameter of the glass fiber" is used to mean the maximum difference between the predetermined diameter and the diameter of the glass fiber measured within a length of 1,000 mm including the plotted point in Fig. 6. The controller 60 controlled the seal-ring actuator 14b based on the data of the diameter of the optical fiber preform 30 measured at the position directly above the seal ring 14U. Thus, the controller 60 adjusted the iris diaphragm 14a so that the difference between the inner diameter of the seal ring 14U and the measured data of the diameter of the optical fiber preform 30 could become constant. While this adjustment was performed, the optical fiber preform A was drawn.

The time needed for the optical fiber preform *A* to move from the position of the preform diameter monitor 13 to the position of the seal ring 14U is determined by the feeding speed of the optical fiber preform *A*. Therefore, after the diameter of the optical fiber preform *A* is measured, the inner diameter of the seal ring 14U is adjusted by delaying the time for the foregoing movement. As can be seen from Fig. 6, this drawing method enables the stable drawing of an optical fiber preform throughout its length.

Figure 7 is a graph showing the relationship between the maximum deviation of the diameter of the glass fiber and the corresponding longitudinal position of the optical fiber preform *B* from which the diameter-measured position of the glass fiber is drawn. The optical fiber preform *B* is drawn while the controller 60 controls the seal-ring actuator 14b to adjust the iris diaphragm 14a so that the area of the clearance between the seal ring 14U and the optical fiber preform *B* can become constant. As can be seen from Fig. 7, this drawing method also enables the stable drawing of an optical fiber preform throughout its length.

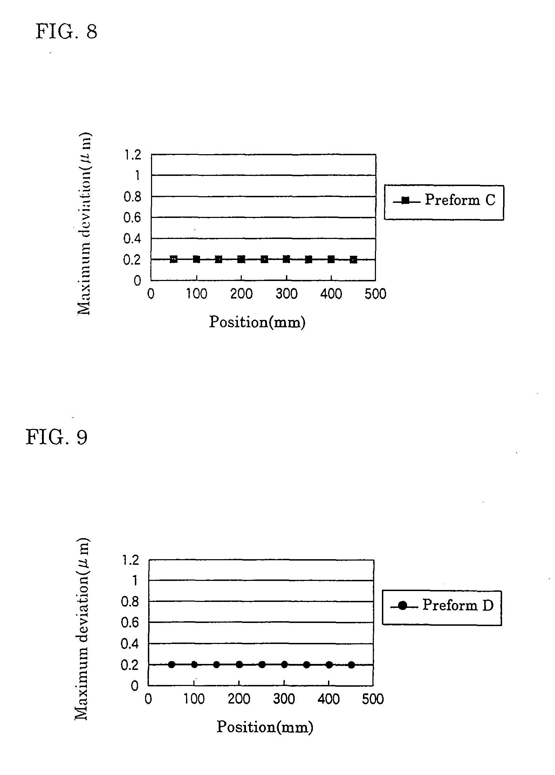

Figure 8 is a graph showing the relationship between the maximum deviation of the diameter of the glass fiber and the corresponding longitudinal position of the optical fiber preform *C* from which the diameter-measured position of the glass fiber is drawn. The optical fiber preform *C* is drawn by the following method. First, before the drawing operation, the relationship between the diameter and longitudinal position of the optical fiber preform *C* is obtained as shown in Fig. 5. The relative vertical position between the drawing furnace and the optical fiber preform *C* is also measured. During the drawing operation, based on these data, the controller 60 controls the seal-ring actuator 14b to adjust the inner diameter of the iris diaphragm 14a. More specifically, as soon as the position "0 mm" of the preform shown in Fig. 5 arrives at the position of the seal ring 14U, the adjustment of the inner diameter of the seal ring 14U is started. The diameter of the optical fiber preform *C* at the position of the seal ring 14U at a specific time can be calculated from the feeding speed of the optical fiber preform *C* and the data shown in Fig. 5. As can be seen from Fig. 8, this drawing method also enables the stable drawing of an optical fiber preform throughout its length.

The inside pressure of the drawing furnace 20 may be controlled to be constant together with the above-described control. This pressure control can be performed by controlling the amount of the gas fed into the drawing furnace 20 based on the data of the inside pressure measured by the differential pressure gauge 23.

Figure 9 is a graph showing the relationship between the maximum deviation of the diameter of the glass fiber and the corresponding longitudinal position of the optical fiber preform *D* from which the diameter-measured position of the glass fiber is drawn. The optical fiber preform *D* is drawn by the following method. During the drawing operation, the inside pressure of the drawing furnace 20 is measured by the differential pressure gauge 23. The inside pressure at the time the clearance between the seal ring 14U and the optical fiber preform *D* is adjusted to be 2 mm, is used as a reference. During the drawing operation, the controller 60 controls the seal-ring actuator 14b to adjust the inner diameter of the iris diaphragm 14a so that the inside pressure of the drawing furnace 20 can become constant. As can be seen from Fig. 9, this drawing method also enables the stable drawing of an optical fiber preform 30 throughout its length.

The control for maintaining the inside pressure constant may be performed simultaneously with the earlier-described control for maintaining the difference between the diameter of the optical fiber preform and the inner diameter of the seal ring constant.

When a plurality of preform diameter monitors are provided, the amount of positional change in the center axis of the optical fiber preform can be measured. In the above-described control of the inner diameter of the seal ring 14U, when the optical fiber preform 30 is in an eccentric position with respect to the seal ring 14U, as shown in Fig. 4, the controller 60 controls the seal-ring shifter 14e to shift the seal ring 14U so that the optical fiber preform 30 can pass through the center of the seal ring 14U. This operation prevents the optical fiber preform 30 from coming into contact with the seal ring 14U after becoming off-center with respect to the seal ring 14U. As a result, the optical fiber preform can be drawn with an increased stability.

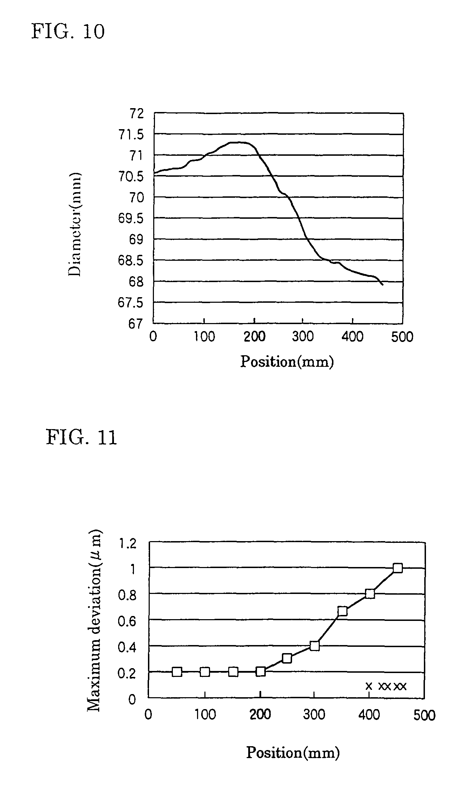

Figure 10 is a graph showing the relationship between the diameter and longitudinal position of an optical fiber preform used in a comparative example. Figure 11 is a graph showing the relationship between the maximum deviation of the diameter of the glass fiber and the corresponding longitudinal position of the optical fiber preform used in the comparative example from which the diameter-measured position of the glass fiber is drawn. In the comparative example, the optical fiber preform was drawn by using a muffle tube having an inner diameter of 80 mm and a seal ring having an inner diameter of 72 mm. As can be seen from Figs. 10 and 11, when the preform diameter decreased to 69 mm, the maximum deviation of the diameter of the glass fiber increased. When the preform diameter further decreased to the vicinity of 68 mm, the maximum deviation abruptly increased in excess of 5 µm. Observation of the furnace after the drawing operation revealed marks of oxidation on the inner surface of the carbon muffle tube. In Fig. 11, the sign "×" shows the occurrence of the abrupt increase in the maximum deviation of the diameter of the glass fiber.

As described above, when the gas seal structure is employed, the variation in the clearance between the gas-feeding opening and the optical fiber preform must be maintained small. If the clearance varies, the ratio between the upward-flowing stream and the downward-flowing stream produced by the gas blown from the opening varies. More specifically, if the decreased preform diameter increases the clearance, the percentage of the stream flowing upward increases, decreasing that of the downward-flowing stream. As a result, the velocity of the downward-flowing stream decreases, making it extremely difficult to suppress the upward-flowing stream of the atmospheric gas due to the heat of the furnace. Consequently, the gas flow becomes unstable. This condition increases the variation in the diameter of the drawn glass fiber. Moreover, the outside air may enter the furnace through part of the shutter, deteriorating the inside members of the furnace by oxidation.

The above-described problem-creating tendency becomes noticeable as the preform diameter increases. In comparison with a small-diameter preform, even a small variation in the preform diameter relatively increases the variation in the area of the clearance at the gas-sealing portion. As a result, a stable drawing operation cannot be performed.

The method of and apparatus for drawing an optical fiber of the present invention can maintain the clearance between the optical fiber preform and the seal ring constant even when the diameter of the optical fiber preform 30 varies longitudinally. This feature enables the stabilized drawing operation. Consequently, the diameter of the drawn glass fiber 40a can be maintained constant. Furthermore, the useful life of the muffle tube 21 can be increased by suppressing its oxidation.

The present invention is described above in connection with what is presently considered to be the most practical and preferred embodiments. However, the invention is not limited to the disclosed embodiments, but, on the contrary, is intended to cover various modifications and equivalent arrangements included within the spirit and scope of the appended claims.

In the above explanation, the drawing furnace used in the embodiment has a shutter. However, the method and apparatus of the present invention can be implemented without using the shutter.

The entire disclosure of Japanese patent application 2002-329914 filed on November 13, 2002 including the specification, claims, drawing, and summary is incorporated herein by reference in its entirety.

## Claims

1. A method of drawing an optical fiber, the method comprising the steps of:
(a) feeding an optical fiber preform into a drawing furnace;
(b) adjusting the inner diameter of a seal ring located at the top portion of the drawing furnace while feeding the optical fiber preform;
(c) feeding a gas into the drawing furnace such that the gas hits the optical fiber preform and produces a stream that flows out at the clearance between the seal ring and the optical fiber preform; and
(d) drawing the optical fiber preform by heating and softening the leading-end portion of the optical fiber preform.

2. A method of drawing an optical fiber as defined by Claim 1, wherein the step of adjusting the inner diameter of the seal ring is performed base on the diameter of the optical fiber preform.

3. A method of drawing an optical fiber as defined by claim 2, the method further comprising the steps of:
(a) measuring the diameter of the optical fiber preform in advance; and
(b) measuring the relative vertical position between the drawing furnace and the optical fiber preform in advance;
the step of adjusting the inner diameter of the seal ring being performed based on the measured data of the preform diameter and the relative vertical position between the two members.

4. A method of drawing an optical fiber as defined by claim 2, the method further comprising the step of measuring the diameter of the optical fiber preform at a position directly above the seal ring;
the step of adjusting the inner diameter of the seal ring being performed based on the measured data of the preform diameter.

5. A method of drawing an optical fiber as defined by any of claims 2 to 4, wherein the step of adjusting the inner diameter of the seal ring is performed such that the difference between the inner diameter of the seal ring and the diameter of the optical fiber preform becomes constant.

6. A method of drawing an optical fiber as defined by any of claims 2 to 4, wherein the step of adjusting the inner diameter of the seal ring is performed such that the area of the clearance between the seal ring and the optical fiber preform becomes constant.

7. A method of drawing an optical fiber as defined by Claim 1, wherein the step of adjusting the inner diameter of the seal ring is performed in such a way that the inside pressure of a muffle tube placed in the drawing furnace becomes constant.

8. A method of drawing an optical fiber as defined by any of claims 1 to 7, the method further comprising the step of shifting the seal ring so that the center of the optical fiber preform can coincide with that of the seal ring whenever the optical fiber preform becomes off-center with respect to the seal ring.

9. An apparatus for drawing an optical fiber by heating the leading-end portion of an optical fiber preform while feeding it into a drawing furnace, the apparatus comprising:
(a) a gas-sealing structure comprising a seal ring and a gas feeder capable of blowing a gas against the optical fiber preform;
(b) a seal-ring actuator capable of adjusting the inner diameter of the seal ring; and
(c) a controller for controlling the seal-ring actuator.

10. An apparatus for drawing an optical fiber as defined by claim 9, the apparatus further comprising a preform diameter-measuring section that measures the diameter of the optical fiber preform at a position directly above the seal ring.

11. An apparatus for drawing an optical fiber as defined by claim 9, the apparatus further comprising an inside pressure-measuring section that measures the inside pressure of the drawing furnace.

12. An apparatus for drawing an optical fiber as defined by any of claims 9 to 11, the apparatus further comprising a seal-ring shifter capable of shifting the seal ring so that the center of the optical fiber preform can coincide with that of the seal ring.
